(19) **Europäisches Patentamt / European Patent Office / Office européen des brevets**

(11) **EP 1 873 479 B1**

(12) **EUROPEAN PATENT SPECIFICATION**

(45) Date of publication and mention
of the grant of the patent:
**17.09.2014 Bulletin 2014/38**

(51) Int Cl.:
***G01B 7/02*** *(2006.01)*

(21) Application number: **06013223.0**

(22) Date of filing: **27.06.2006**

(54) **Device for distance measurement**

Vorrichtung zur Abstandsmessung

Dispositif pour mesurer la distance

(84) Designated Contracting States:
**DE**

(43) Date of publication of application:
**02.01.2008 Bulletin 2008/01**

(73) Proprietor: **ABB AS**
**1396 Billingstad (NO)**

(72) Inventors:
• **Mossige, Mortan**
**NO-4365 NAERBÖ (NO)**

• **Svensen, Nina**
**NO-4340 Ålgård (NO)**

(74) Representative: **Savela, Reino Aleksi et al**
**ABB AB**
**Intellectual Property**
**Ingenjör Bååths Gata 11**
**721 83 Västerås (SE)**

(56) References cited:
**EP-A- 0 629 450      DE-A1- 19 727 094**
**DE-U1- 9 001 451     FR-A- 2 242 660**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to a device for measuring distances, for example distance between a work unit such as a paint robot and a work piece such as a vehicle or the like to be painted.

BACKGROUND OF THE INVENTION

There are many application where the distance between a work unit and a work piece has to be measured in order to have the work unit at the proper distance in order to obtain the desired result of the work.

One application where it is important that the distance between the work unit and the work piece is kept at the appropriate distance is painting facilities where industrial robots are used. Often one or several robots are placed adjacent a conveyor line, on which the objects to be painted are transported. The robots are programmed to follow certain patterns along the object in order to cover the selected areas of the object. In order to have the proper quality of the paint job the paint nozzle attached to the arm of the robot should be moved in the programmed pattern at a certain pre-programmed distance from the object. Another application could be spotwelding where the end of the spot-welding robot applies a number of spot-welds to for instance the body of a vehicle along a pre-programmed line of movement.

In order to achieve this, and in particular ascertain that the object is placed in the right position in relation to the pattern of the work unit and/or if the object is somewhat misaligned in relation to the right position, to correct the misalignment, sensors are often used to measure the distance and correct the deficiencies from the proper position.

The sensors could include cameras, radar or IR-sensors or other suitable sensor means for measuring the position of the object to be worked on in relation to the work unit. The use of sensors however means additional equipment that has to be mounted on or in the vicinity of the work unit such as the robot arm, and entails additional programming as well as a weak point in the system because the vulnerability of the sensors. In a paint facility application it has to be ensured that paint cannot impair the function of the sensors, i.e. the sensors have to be placed such that paint cannot collect on them. This in turn limits the positions the sensors can be put.

One example of a painting device having distance sensors is disclosed in US 6,096,132 having spray gun heads mounted on a frame and movable in three dimensions. Sensors placed close to the spray gun heads measure the distance to the object to be painted. The spraying device disclosed is of an ink jet type having a number of spray gun heads and is intended for spraying specific images on to an object and in particular the device is intended to be able to follow curved surfaces of for example a vehicle. The device is thus not intended for complete painting of an object but rather specific images. Thus the amount of colour from the spray gun heads is not large and there is a small risk of impairing the function of the sensors by getting paint on them.

EP-0629450 describes an electrostatic powder spray system with an eddy current/inductance sensor for measuring the distance to the surface of the object being coated.

However for painting whole objects like a vehicle body often electrically conductive paint is used together with a spray atomizer. One such atomizer is disclosed in US 6,439,485. The atomizer comprises a central spray head and a number of electrode holders arranged in a concentric ring around the spray head. The electrode holders include high-voltage generators. The function of the atomizer is that the droplets from the spray head are charged in the electric field formed between the high-voltage electrodes and the grounded spray head and the surface of the object to be painted is connected to ground so that, as a result of the potential difference induced, the charged paint particles are accelerated towards the surface, where they adhere.

DE19727094 discloses a method involves using the tool end part directly as a measurement medium for an electrical voltage, current, capacitance or frequency measurement. A calibration curve is generated which reproduces the relationship between electrical measurement parameter and the distance between the tool end part and the object surface or object.

Because of the high voltages associated with this type of paint equipment and the spray clouds of paint it may be difficult to apply distance sensors in the vicinity of the spray head. Further, additional sensors add to the cost and complexity of such a painting system.

However, even with robots following specific pre-programmed paths that during operation do not need to know the distance to the object to be for example painted or welded, there is a need for a simple way of measuring and detecting the proper position in relation to the robot before the start of the work procedure and to correct any possible deviations from the correct positions.

BRIEF DESCRIPTION OF THE INVENTION

The aim of the present invention is to provide a means for measuring the distance to an object to be worked on in a simple and efficient way, and to correct the deviations from the correct distance.

This aim is solved by a method according to claim 1 and a device according to claim 11.

According to a further aspect of the invention, it is characterised by further comprising the steps of measuring the voltage of the electrostatic applicator, measuring the saturation current between the applicator and the object, determining the onset voltage where the ionization begins, which voltage is dependent on the distance to the object, calculating the actual distance to the object based on the measured voltage and current taking into account the distance dependent onset voltage.

According to another aspect of the invention, wherein the work tool is a welding tool, it is characterised by further comprising the steps of measuring the voltage of the electrostatic applicator, measuring the saturation current between the applicator and the object, determining the onset voltage where the ionization begins, which voltage is dependent on the distance to the object, calculating the actual distance to the object based on the measured voltage and current taking into account the distance dependent onset voltage.

The advantages with the present invention are several. In its most basic form the current is constantly measured and compared with a predetermined current value. The predetermined current value is obtained by applying a high voltage to the work tool, moving the work tool to a certain distance where the current is measured, which current then becomes the threshold value.

When the device holding the work tool is moved, the current is measured and compared to the threshold value and if the measured current exceeds the threshold, this is an indication that the object is within the distance. The measuring is thus used as a proximity sensor, whereby collisions could be avoided between the work tool and the object.

With the method according to the present invention it is also possible to measure the actual distance between for example an electrostatic paint applicator and the object, which makes it possible to measure and control that the object is in the proper position without the need for additional distance sensors. The measurements could then be used to either adjust the position of the object and/or adjust the movement of the applicator in relation to the object.

The present invention could thus be implemented in a simple way in existing equipment for controlling and handling a paint process, such as a paint robot, a conveyor line for the objects, the control equipment for the applicator and the paint supply. There is thus no need for introducing additional equipment or sensors in order to be able to gain information regarding the distance between the applicator and the object.

These and other aspects of and advantages with the present invention will become apparent from the following detailed description of the invention and from the accompanying drawings.

BRIEF DESCRIPTION OF THE DRAWINGS

In the following detailed description of the invention reference will be made to the accompanying drawings, of which

Fig. 1     is principle view of electrostatic painting, with which the present invention could be utilized,

Fig. 2     is a representation of a hyperbolic shaped point-to-plane negative corona,

Fig. 3     is a diagram over a Warburg distribution for negative point-to-plane corona,

Fig. 4     is a diagram over an ideal point-to-plane relation,

Fig. 5     is a diagram over a tested point-to-plane relation for a bell cup applicator,

Fig. 6     is a schematic view of a test setup,

Fig. 7     is a diagram of tested relation,

Fig. 8     is a diagram of measured data,

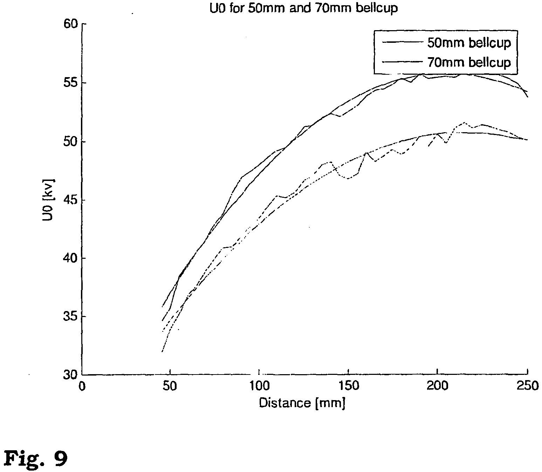

Fig. 9     is a further diagram of measured data,

Fig. 10    is one application of use of the present invention, and

Fig. 11    is another application of use of the present invention.

## DETAILED DESCRIPTION OF THE INVENTION

The present invention relates to the utilization of a work too having a voltage between the tool and the object to be worked on, such as for example an electrostatic bell applicator in a painting application for measuring distances to objects, in particular objects to be painted.

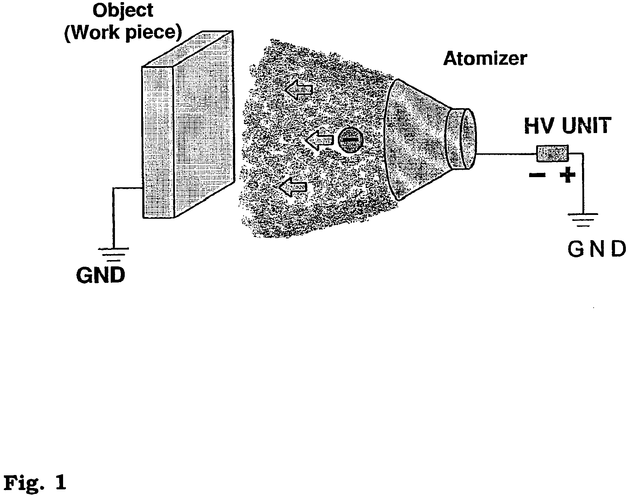

The present invention will be described in more detail utilizing an electrostatic applicator as an example. In a painting process, a grounded target or object is used as the anode and the atomizer or applicator is the cathode, Fig 1. Negative voltage is applied to produce an electrostatic field between the two electrodes. The paint droplets are charged, either directly or indirectly and applied to the object. A high voltage is applied from a high voltage generator to the applicator. The air surrounding the nozzle is strongly ionized and will for a local corona discharge.

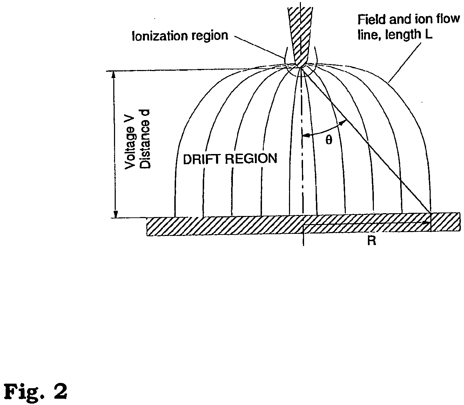

The method according to the present invention utilizes the point-to-plane saturation current as an important factor for determining the distance to the object. The following text will describe this. DC electrostatic gas-discharge can be divided into two different types, positive and negative. The difference is that either the earth plane is grounded in positive or negative voltage. As described above, the object to be painted is connected to the positive electrode of the high voltage generator, and the bell is connected to the negative voltage. To develop a simplified voltage/current relation for the bell, one can view a model of point-to-plane. As shown in Fig. 2, a sharp, hyperbolic shaped point is arranged over a large conductive ground plane. As will be described later, the reason for using a hyperbolic shaped point, is that the electric field lines can be calculated by solving Poisson's equation, hence there is an analytical solution.

This model is regarded as a time-dependent problem, where the ions are drifting along a field line $\overrightarrow{E(r,t)}$). Further we define the ion-density $\rho(\vec{r},t)$, and the ion-velocity $\overrightarrow{v(r,t)}$ .The ion drift velocity will then be given by:

$$\vec{v} = \mu\vec{E}(\vec{r},t) \tag{1}$$

where $\mu$, the ion mobility, is regarded field independent. By taking the derivate along the ion-path:

$$\left(\frac{\partial\rho}{\partial t}\right)_{ionepath} = \frac{\partial\rho}{\partial t} + \vec{v}\cdot\nabla\rho \tag{2}$$

and combing (2) with a continuity equation and the Poisson equation we get

$$\frac{\partial\rho}{\partial t} + \nabla\cdot(\vec{v}\rho) = \frac{\partial\rho}{\partial t} + \vec{v}\cdot\nabla\rho + \rho\nabla\cdot\vec{v} = 0 \tag{3}$$

By inserting (3) in (2), with $\vec{v} = \mu\vec{E}$

$$\left(\frac{\partial\rho}{\partial t}\right)_{ionepath} = -\rho\nabla\cdot\vec{v} = -\mu\rho\nabla\vec{E} \tag{4}$$

But $\nabla\vec{E} = \dfrac{\rho}{\varepsilon_0}$ (Poisson's equation), so we get

$$\left(\frac{\partial\rho}{\partial t}\right)_{ionepath} = \frac{-\mu\rho^2}{\varepsilon_0} \tag{5}$$

where the permittivity $\varepsilon_0$ of free space is given by

$$\varepsilon_0 = \frac{1}{c^2 \mu_0} = 8.8542 * 10^{-12} \frac{F}{m}.$$

Equation (5) can be integrated directly to get the unipolar charge drift formula:

$$\frac{1}{\rho(t)} - \frac{1}{\rho_0} = \frac{\mu}{\varepsilon_0}(t - t_0), \rho_0 \equiv \rho(t_0) \qquad (6)$$

This equation is exact for all place and time independent of electrical field configurations. This equation shows how each ion density, $\rho(t)$, will decrease with time if you follow the path of the ions.

It is further assumed that the electric field is constant along any field line of length L. That makes it possible to estimate the field strength to:

$$E = \frac{U}{L} \qquad (7)$$

As a result of E being constant along the field lines, an ion travelling along one of the field lines will have a travel time given by:

$$T = \frac{L}{v} = \frac{L}{\mu E} = \frac{L^2}{\mu U} \qquad (8)$$

At last, by assuming that the ion density at the ionisation point, see fig. 2, $\rightarrow \infty$ we get from (6)

$$\rho_{plane} \approx \frac{\varepsilon_0}{\mu T} = \frac{\varepsilon_0}{L^2} U \qquad (9)$$

This gives us the unipolar space charge saturation current density:

$$J_s = \frac{\varepsilon_0 \mu U^2}{L^3} \left[ \frac{A}{m^2} \right] \qquad (10)$$

Since the point is hyperbolic, Poisson's equation can be solved exactly for this kind of shape. It can be shown from the work of R. S. Sigmond, M. Goldman "Some basic gas and surface discharge phenomena in electrostatics", International Conferences of Electrostatics, 1975, that the shape of the field lines is approximately the same as the electric field-lines. This gives the length of the field lines, ref fig. 2:

$$L \approx \sqrt{R^2 + \frac{d^2}{\cos^2 \theta}} = d\sqrt{2\tan^2 \theta + 1} \qquad (11)$$

If we now insert (11) in (10) we have an expression for the current density as a function of the angle θ.

$$J(\theta) = \frac{\varepsilon_0 \mu U^2}{d^3 (2\tan^2\theta + 1)^{\frac{3}{2}}} \tag{12}$$

In 1899 E. Warburg, "Handbuch der Physics", Vol. 14, Springer Verlag, Berlin 1927, studied the distribution for positive and negative point-to-plane corona. He showed that the current distribution will follow:

$$J(\theta) = J(0)\cos^m(\theta) \tag{13}$$

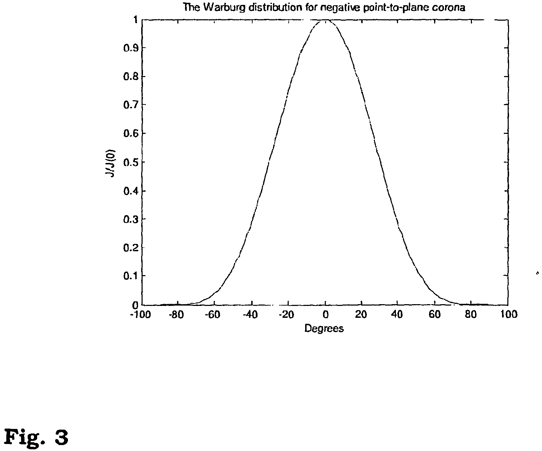

For negative corona m will be 4.65, and 4.82 for positive corona. This distribution is valid for angles less then 60°. For angles larger then 60°, the current will drop to 0. A plot of the Warburg distribution for negative point-to-plane corona is shown in Fig. 3.

If we now integrate (12) over the valid range, -60°-60°, of the Warburg distribution, we finally get the unipolar point to plane saturation current formula:

$$I_s = \frac{2\varepsilon_0 \mu U^2}{d} \tag{13}$$

By inserting $\varepsilon_0 = 8.8542 * 10^{-12}$ and $\mu \approx 2.3 * 10^{-4} \frac{m^2}{Vs}$ for free air at 1 atm, and U in kV, d in mm, we get a more convenient formula:

$$I_s \approx \frac{4U^2}{d} \tag{14}$$

where Is is given directly in $\mu$A.

The saturated point-to-plane current equation, (14) has been presented. To further derive bell-cup to plane saturated equation, the point-to-plane equation is firstly analyzed. By multiplying both sides of (14) by $\frac{1}{U}$, we get:

$$\frac{I_s}{U} = \frac{4U}{d} \tag{15}$$

We see that right side of (15) is now a linear element, if d is regarded constant. This makes it easy to detect similarities in related lab configurations, and this is also the most common way used by other scientists like Sigmond and Goldman in related configurations.

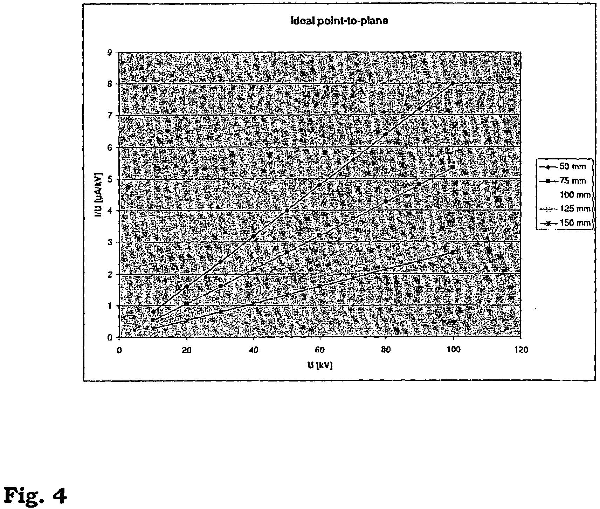

By graphing (15) for a set of distances, we get the curve according to Fig. 4.

Since the bell-cup is considered to be a rather complex shape, it is not possible to derive an analytical equation for the saturation current. To derive a formula for the current, a reverse engineering was made to obtain measurements done in lab.

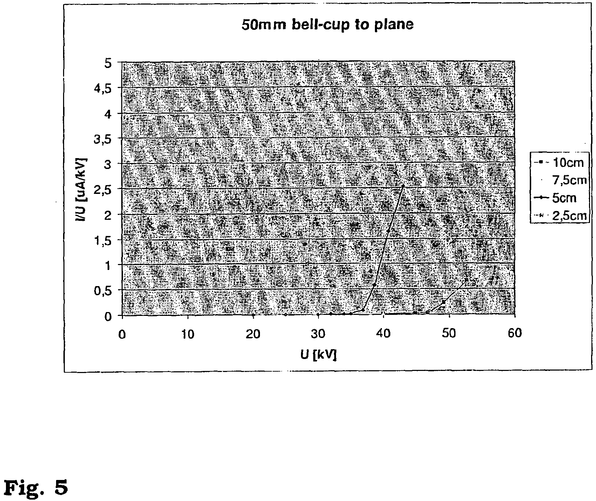

The following relation has been recorded, see fig. 5. If we now compare the point to plane graph, Fig. 4, with Fig. 5, we can see that there are considerable equalities.

By assuming that we can estimate the linear part of the curves in Fig. 5, and expect I/U to be zero where the curve is not linear, we can fully describe the I/U relation. Adamiaka and Atten "Simulation of corona discharge in point-plane configuration", Journal of Electrostatics vol 61, 85-98 2004, studied non ideal point-to-plane configurations, and showed that the I/V relation will go from (15) to (16).

$$\frac{I_s}{U} = \frac{kU - kU_0}{d} \tag{16}$$

Usually in mathematics linear curves are expressed as

$$y = ax + b \tag{17}$$

where 'a' is the gradient of the curve, and 'b' is the point of intersection with the y axis.
But the same linear curve can also be described by the gradient and the intersection with the x axis, 'c':

$$b = -ac \Rightarrow y = a(x - c) \tag{18}$$

By comparing (16) with (18) we see that we have a linear curve with $a = \dfrac{k}{d}$ and $c=U_0$ The bell-cup can be regarded a non ideal point, so it is $c=U_0$ a good assumption to expect (16) to be valid. From this, it follows that a a model for two factors has to be developed, $U_0(d)$ and $\dfrac{k}{d}(d)$. $c=U_0$

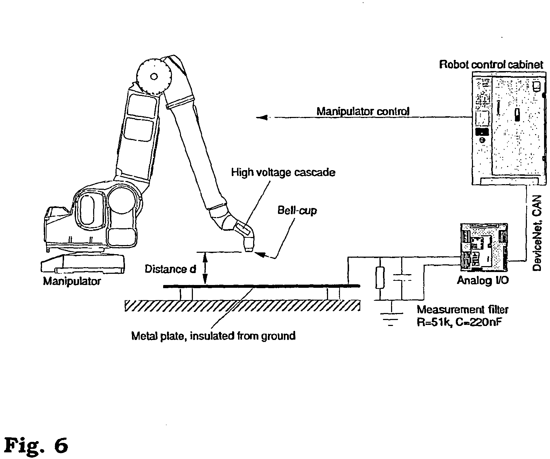

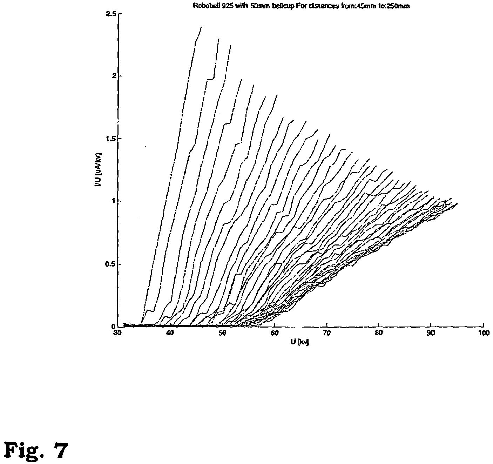

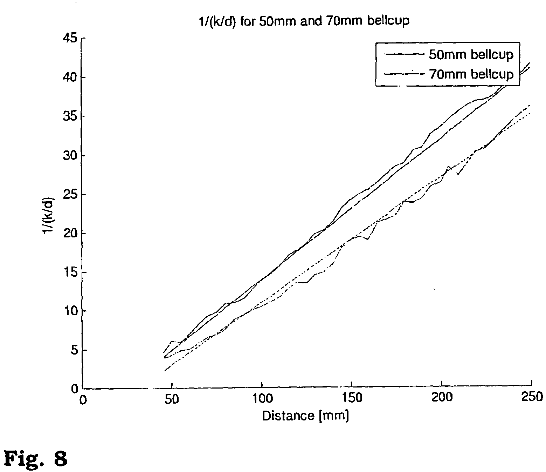

But the measurement results mentioned above are too coarse to use as background data for a curve fit model. As can be seen from Fig. 5 there are only from 3-6 measurements per distance, so the data derived can more be regarded as an indication that (16) is valid.
A lab experiment was set up, Fig. 6. Since the applicator was attached to a robot, it was possible to record data at many positions with high precision.
As Fig. 6 shows, the current is measured by connecting a serial resistor between the metal plate and ground and measuring the voltage over it.
The current measured has quite a lot of noise, but by using a capacitor, the noise is heavily filtered. Each measurement is done in steady state, i.e. the robot is placed in on position, and the current is measured by averaging the current over a 'long' time, which means that only the DC current is measured. Because of this, the cut-off frequency of the RC circuit can be disregarded. The current is sampled by a 14 bit ADC connected to a DeviceNet board. This makes it possible to do extreme over-sampling and averaging and then by use of the robot controller to flush the measured data to disk.
As can be seen from Fig. 7, a collection of approximately linear functions, one for each distance, is obtained. By use of least square fit on each line, a collection of linear functions is obtained. By further separating $\dfrac{k}{d}$ $U_0$ data collection to use for further analysis is obtained. In Fig. 8 $\dfrac{1}{\frac{k}{d}(d)}$ is plotted. As we can see from the plot, there is a strong indication that $\dfrac{1}{\frac{k}{d}(d)}$ can be approximated to be a linear function. Again, least square fit is used, and as can be seen of Fig. 8, we have a good fit.
For a 50mm bell-cup the following equation is obtained:

$$\text{50mm bell-cup: } \frac{1}{\frac{k}{d}(d)} \approx 4.2 - 0.18d \tag{19}$$

The term $U_0$ is in electrical discharge physics called the onset voltage and gives us the voltage where ionization starts. There is no analytical way to derive the value of $U_0$, but F. W. Peek, "Dielectric Phenomena in High-Voltage Engineering" 3rd edition, McGraw-Hill, New York 1929, developed an empirical equation for the onset value between two wires. This formula takes into account that the size of an electrode will grow after corona is established due to the fact that corona is an extremely good conductor. Peek's law does also include temperature, gas pressure and roughness of the conductor. Peek's law has been considered to be too complex to use. Instead, a simpler approach by use of curve fitting, using a 2nd order polynomial, has been used. Higher order polynomial has also been tried, but the accuracy gained by going from second order to third order is relative small. As long as the model is used within well defined limits, a second order polynomial approach is considered to be a good substitution for use of Peek's law.

By using the same technique as described earlier, the graph shown in Fig. 5 is obtained. By use of standard least square fitting, we obtain the following model for

$$U0(d) \approx -0.00078d^2 + 0.32d + 22.9 \tag{20}$$

By inserting (20) and (19) in (16), we finally get the bell-to-plane equation for a 50mm bell-cup:

$$\frac{I_s}{U} = \frac{kU - kU_0}{d}, U \geq U_0$$

$$U0(d) \approx -0.00078d^2 + 0.32d + 22.9 \tag{21}$$

$$\frac{1}{\frac{k}{d}(d)} \approx 0.18d - 4.2$$

From the above equations it is thus possible to calculate the distance from the electrostatic bell applicator to an object to be painted based on voltage and current measurements.

As could be understood from the above description equation (21) could be generalized to be applicable to other sizes of bell-cups where the variables for the actual bell applicator are derived in the same manner as described above. We could then write equation (21) as:

$$\frac{I_s}{U} = \frac{kU - kU_0}{d}, U \geq U_0$$

$$U0(d) \approx c_1 d^2 + c_2 d + c_3 \tag{22}$$

$$\frac{1}{\frac{k}{d}(d)} \approx c_4 d - c_5$$

where cn=constant

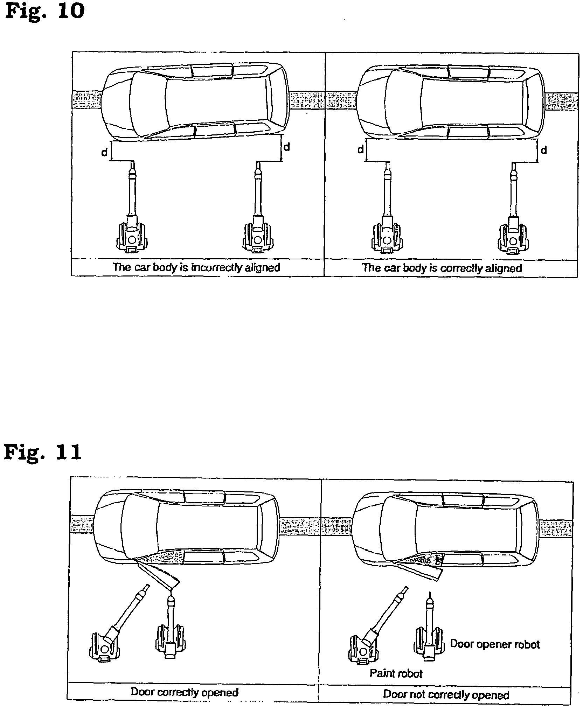

With the above equation it is thus possible to measure the distance to grounded objects with the help of the current and voltage measurements of an electrostatic bell applicator without having to use additional distance sensors. The measurement of the distance could be used to ascertain if the object to be painted is positioned properly, Fig. 10. If not the information could either be used to alert an operator to correct the deficiencies or could be used to control other equipment to correct for the deficiencies, such as adjusting the control program of the paint robot so that its pattern of movement is corrected to the actual situation.

The measurement could also be used as a proximity sensor, for example in a paint line for cars where it could be used for detecting that a door is open, Fig. 11. In this case there is a simpler way of detecting if the object is within a certain distance from the applicator. In this case a threshold value of the current is predetermined by applying a high voltage field to the applicator, move the applicator to a certain distance to the object and measure the actual current, which current becomes the threshold value. When the robot then is moved or used, the current is continuously measured and compared to the threshold value. If the measured current exceeds the threshold value, this results in an indication such as an alarm to the operator or that the movement of the robot is stopped.

Preferably the equipment for calculating the distance is incorporated in a suitable casing and/or incorporated in the equipment for handling the bell applicator. The equipment comprises means for measuring the voltages and currents, A/D-converters, samplers, I/O units, a distance calculating unit and storage units for both sampled data and other data regarding the specific bell applicator used and the threshold values for the current when used as proximity sensor. An example is shown in Fig. 6.

The calculating unit is provided with the calculation algorithms described, programmed for the processes needed for calculating the distance. The calculating unit may as mentioned above also be provided with known values. The calculating unit communicates with other circuitry and I/O devices for different measures depending on the actions to be taken. The result from the calculating unit could for example be used to stop equipment for avoiding collision between the applicator and objects, to alert operators via signals or light, to correct the control program of a robot handling the applicator and/or other possible equipment used. The result from the calculating unit could also be displayed on a display means.

The calculating unit may further comprise filters for filtering the signals, A/D-converters for converting and sampling the signals and a micro processor. The micro processor comprises a central processing unit CPU performing the following functions: collection of measured values, processing of measured values, calculation of distance to fault and output of result from calculation. The micro processor further comprises a data memory and a program memory.

A computer program for carrying out the method according to the present invention is stored in the program memory. It is to be understood that the computer program may also be run on general purpose computer instead of a specially adapted computer.

The software includes computer program code elements or software code portions that make the computer perform the said method using the equations, algorithms, data and calculations previously described. It may also be run in a distributed way over a network. A part of the program may be stored in a processor as above, but also in a RAM, ROM, PROM or EPROM chip or similar. The program in part or in whole may also be stored on, or in, other suitable computer readable medium such as a magnetic disk, CD-ROM or DVD disk, hard disk, magnetooptical memory storage means, in volatile memory, in flash memory, as firmware, or stored on a data server.

Even though the present invention has been described in conjunction with a painting process, the principles of the present invention can of course be utilized with other types of equipment, for example in one or more welding applications, although different types of formulae and/or functions and estimations have to be taken into consideration.

It is to be understood that the embodiments described above and shown in the drawings are to be regarded as non-limiting examples of the present invention and that it may be modified in many ways within the scope of the appended patent claims.

## Claims

1. Method for measuring the distance to an object to be painted by an electrostatic paint applicator, wherein the method comprises the steps of:

   - applying a voltage to the electrostatic paint applicator, measuring the current between the electrostatic paint applicator and the object to be painted,
   - comparing the current with a predefined value, which value is based on a predetermined distance between the electrostatic paint applicator and the object, and
   - indicating if the measured current exceeds the predefined value, which provides information that the object is within a certain distance from the electrostatic paint applicator.

2. Method according to claim 1, further comprising the steps of

   - measuring the voltage of the electrostatic paint applicator,
   - measuring the saturation current between the applicator and the object,
   - determining the onset voltage where the ionization begins, which voltage is dependent on the distance to the object,
   - calculating the actual distance to the object based on the measured voltage and current taking into account the distance dependent onset voltage.

3. Method according to claim 2, wherein the saturation current is based on integrating a Warburg distribution for a corona between the applicator and the object, whereby the saturation current is approximated to

$$I_s \approx \frac{4U^2}{d} \quad (14).$$

4. Method according to claim 3, wherein the right side of the approximation is transformed to a linear element if the distance is regarded as constant, wherein the relation between the saturation current and the voltage becomes:

$$\frac{I_s}{U} = \frac{4U}{d} \quad (15)$$

5. Method according to claim 4, wherein compensation is made for non-ideal configuration of the applicator as:

$$\frac{I_s}{U} = \frac{kU - kU_0}{d} \quad (16),$$

where $U_0$ is the onset voltage.

6. Method according to claim 5, where the relation between the onset voltage and the distance to the object could be expressed as:

$$U_0(d) = c_1 d^2 + c_2 d + c_3, \quad (20)$$

where $c_n$ are constants that are derived depending on the bell applicator used.

7. Method according to claim 6, wherein the relation k/d is expressed as:

$$\frac{1}{\frac{k}{d}(d)} = c_4 d - c_5 \quad (19)$$

8. Method according to claim 6 or 7, wherein (19) and (20) are obtained by real-time calibration.

9. Method according to any of the preceding claims, wherein the information obtained regarding the distance is used to control equipment associated with the painting process.

10. Method according to any of the preceding claims, wherein the information regarding the distance is displayed on a graphic user interface or other display means.

11. Device for measuring the distance to an object to be painted by electrostatic applicator, comprising:

   - means for applying a high voltage field to the applicator and measuring the current between the applicator and the object,
   - means for comparing the current with a predefined value, which value is based on a predetermined distance between the applicator and the object, and
   - means for indicating if the measured current exceeds the predefined value, which provides information that the object is within a certain distance from the applicator.

12. Device according to claim 11, further comprising:

- means for measuring the voltage of the electrostatic applicator,
- means for measuring the saturation current between the applicator and the object,
- means for determining the onset voltage where the ionization begins, which voltage is dependent on the distance to the object, and
- means for calculating the actual distance to the object based on the measured voltage and current taking into account the distance dependent onset voltage.

13. System for coating or painting process of objects comprising the device according to claim 11 and further comprising, means for controlling the movement of said electrostatic applicator, and means for controlling equipment for handling said object, wherein the distance information is used for controlling said process.

14. System according to claim 13, wherein the distance information is used to stop said process when the distance is within a certain range.

15. System according to claim 13, wherein the distance information is used to adjust said process.

16. Computer program product comprising computer code means and/or software code portions for making a computer or processor perform the steps according to claims 1-10.

17. Computer program product according to claim 16, stored on a computer-readable medium.

**Patentansprüche**

1. Verfahren zum Messen des Abstands zu einem Objekt, das durch einen elektrostatischen Farbapplikator mit Farbe zu beschichten ist, wobei das Verfahren die folgenden Schritte umfasst:

   - Anlegen einer Spannung an den elektrostatischen Farbapplikator, Messen des Stroms zwischen dem elektrostatischen Farbapplikator und dem mit Farbe zu beschichtenden Objekt,
   - Vergleichen des Stroms mit einem vordefinierten Wert, wobei der Wert auf einem vorgegebenen Abstand zwischen dem elektrostatischen Farbapplikator und dem Objekt beruht, und
   - Angeben, ob der gemessene Strom den vordefinierten Wert übersteigt, was Informationen liefert, dass sich das Objekt innerhalb eines bestimmten Abstands von dem elektrostatischen Farbapplikator befindet.

2. Verfahren nach Anspruch 1, das ferner die folgenden Schritte umfasst:

   - Messen der Spannung des elektrostatischen Farbapplikators,
   - Messen des Sättigungsstroms zwischen dem Applikator und dem Objekt,
   - Bestimmen der Schwellenspannung, bei der die Ionisation beginnt, wobei die Spannung von dem Abstand zu dem Objekt abhängt,
   - Berechnen des tatsächlichen Abstands zu dem Objekt aufgrund der gemessenen Spannung und dem gemessenen Strom unter Berücksichtigung des von der Schwellenspannung abhängigen Abstands.

3. Verfahren nach Anspruch 2, wobei der Sättigungsstrom darauf beruht, eine Warburg-Verteilung für eine Korona zwischen dem Applikator und dem Objekt zu integrieren, wobei der Sättigungsstrom auf

$$I_s \approx \frac{4U^2}{d} \ (14)$$

angenähert wird.

4. Verfahren nach Anspruch 3, wobei die rechte Seite der Näherung in ein lineares Element umgeformt wird, wenn der Abstand als eine Konstante betrachtet wird, wobei die Beziehung zwischen dem Sättigungsstrom und der Spannung zu

$$\frac{I_s}{U} = \frac{4U}{d} \ (15)$$

wird.

**5.** Verfahren nach Anspruch 4, wobei die Kompensation für eine nicht ideale Konfiguration des Applikators nach

$$\frac{I_s}{U} = \frac{kU - kU_0}{d} \ (16)$$

ausgeführt wird, wobei $U_0$ die Schwellenspannung ist.

**6.** Verfahren nach Anspruch 5, wobei die Beziehung zwischen der Schwellenspannung und dem Abstand zu dem Objekt durch

$$U_0(d) = c_1 d^2 + c_2 d + c_3, \ (20)$$

ausgedrückt werden kann, wobei $c_n$ Konstanten sind, die abhängig von dem verwendeten Glockenapplikator abgeleitet werden.

**7.** Verfahren nach Anspruch 6, wobei die Beziehung k/d durch

$$\frac{1}{\frac{k}{d}(d)} = c_4 d - c_5 \ (19)$$

ausgedrückt wird.

**8.** Verfahren nach Anspruch 6 oder 7, wobei (19) und (20) durch eine Echtzeit-Kalibrierung erhalten werden.

**9.** Verfahren nach einem der vorhergehenden Ansprüche, wobei die erhaltenen Informationen bezüglich des Abstands verwendet werden, um Geräte zu steuern, die dem Farbbeschichtungsvorgang zugeordnet sind.

**10.** Verfahren nach einem der vorhergehenden Ansprüche, wobei die Informationen in Bezug auf den Abstand auf einer graphischen Anwenderschnittstelle oder anderen Anzeigemitteln angezeigt werden.

**11.** Vorrichtung zum Messen des Abstands zu einem Objekt, das durch einen elektrostatischen Applikator mit Farbe zu beschichten ist, die Folgendes umfasst:

- Mittel zum Anlegen eines Hochspannungsfeldes an den Applikator und Messen des Stroms zwischen dem Applikator und dem Objekt,
- Mittel zum Vergleichen des Stroms mit einem vordefinierten Wert, wobei der Wert auf einem vorbestimmten Abstand zwischen dem Applikator und dem Objekt beruht, und
- Mittel zum Angeben, ob der gemessene Strom den vordefinierten Wert übersteigt, was Informationen liefert, dass sich das Objekt innerhalb eines bestimmten Abstands von dem Applikator ist.

**12.** Vorrichtung nach Anspruch 11, die ferner Folgendes umfasst:

- Mittel zum Messen der Spannung des elektrostatischen Applikators,
- Mittel zum Messen des Sättigungsstroms zwischen dem Applikator und dem Objekt,
- Mittel zum Bestimmen der Schwellenspannung, bei der die Ionisation beginnt, wobei die Spannung von dem Abstand zu dem Objekt abhängt,

- Mittel zum Berechnen des tatsächlichen Abstands zu dem Objekt aufgrund der gemessenen Spannung und dem gemessenen Strom unter Berücksichtigung des von der Schwellenspannung abhängigen Abstands.

**13.** System für einen Beschichtungs- oder Bemalungsvorgang von Objekten, das die Vorrichtung nach Anspruch 11 umfasst und ferner Mittel zum Steuern der Bewegung des elektrostatischen Applikators und Mittel zum Steuern von Geräten zum Handhaben des Objektes umfasst, wobei die Abstandsinformationen verwendet werden, um den Vorgang zu steuern.

**14.** System nach Anspruch 13, wobei die Abstandsinformationen verwendet werden, um den Vorgang anzuhalten, wenn der Abstand innerhalb eines bestimmten Bereichs liegt.

**15.** System nach Anspruch 13, wobei die Abstandsinformationen verwendet werden, um den Vorgang anzupassen.

**16.** Computerprogrammprodukt, das Computercodemittel und/oder Softwarecodeteile umfasst, um einen Computer oder einen Prozessor dazu zu veranlassen, die Schritte nach den Ansprüchen 1-10 auszuführen.

**17.** Computerprogrammprodukt nach Anspruch 16, das auf einem computerlesbaren Medium gespeichert ist.

**Revendications**

**1.** Procédé pour mesurer la distance d'un objet à peindre par un applicateur de peinture électrostatique, ce procédé comprenant les étapes consistant à :

- appliquer une tension sur l'applicateur de peinture électrostatique, pour mesurer le courant entre l'applicateur de peinture électrostatique et l'objet à peindre,
- comparer ce courant avec une valeur prédéfinie, laquelle valeur est basée sur une distance prédéterminée entre l'applicateur de peinture électrostatique et l'objet, et à
- indiquer si le courant mesuré dépasse la valeur prédéfinie, laquelle fournit des informations sur le fait que l'objet se trouve à une certaine distance de l'applicateur de peinture électrostatique.

**2.** Procédé selon la revendication 1, comprenant en outre les étapes consistant à

- mesurer la tension de l'applicateur de peinture électrostatique,
- mesurer le courant de saturation entre l'applicateur et l'objet,
- déterminer la tension de seuil à laquelle l'ionisation commence, laquelle tension de seuil dépend de la distance de l'objet,
- calculer la distance réelle de l'objet en se basant sur la tension et le courant mesurés en tenant compte de la tension de seuil dépendant de la distance.

**3.** Procédé selon la revendication 2, dans lequel le courant de saturation est basé sur l'intégration d'une distribution de Warburg pour un effet de couronne entre l'applicateur et l'objet, le courant de saturation étant calculé approximativement comme étant

$$I_s \approx \frac{4U^2}{d} \qquad (14).$$

**4.** Procédé selon la revendication 3, dans lequel le côté droit de l'approximation est transformé en un élément linéaire si la distance est considérée comme constante, dans lequel le rapport entre le courant de saturation et la tension devient :

$$\frac{I_s}{U} = \frac{4U}{d} \qquad (15).$$

**5.** Procédé selon la revendication 4, dans lequel une compensation est faite pour une configuration pas idéale de l'applicateur comme :

$$\frac{I_s}{U} = \frac{kU - kU_0}{d} \quad (16),$$

où $U_0$ est la tension de seuil.

**6.** Procédé selon la revendication 5, dans lequel le rapport entre la tension de seuil et la distance de l'objet pourrait être exprimé comme :

$$U_0(d) = c_1 d^2 + c_2 d + c_3 \quad (20),$$

où $c_n$ sont des constantes qui sont obtenues selon l'applicateur à coupelle utilisé.

**7.** Procédé selon la revendication 6, dans lequel le rapport k/d est exprimé comme :

$$\frac{1}{\frac{k}{d}(d)} = c_4 d - c_5 \quad (19).$$

**8.** Procédé selon la revendication 6 ou 7, dans lequel (19) et (20) sont obtenus par calibrage en temps réel.

**9.** Procédé selon l'une quelconque des revendications précédentes, dans lequel les informations obtenues concernant la distance sont utilisées pour commander le matériel associé au processus de peinture.

**10.** Procédé selon l'une quelconque des revendications précédentes, dans lequel les informations concernant la distance sont affichées sur une interface graphique utilisateur ou sur un autre moyen d'affichage.

**11.** Dispositif pour mesurer la distance d'un objet à peindre par un applicateur de peinture électrostatique, comprenant :

- un moyen pour appliquer un champ à haute tension sur l'applicateur, pour mesurer le courant entre l'applicateur et l'objet,
- un moyen pour comparer ce courant avec une valeur prédéfinie, laquelle valeur est basée sur une distance prédéterminée entre l'applicateur de peinture et l'objet, et
- un moyen pour indiquer si le courant mesuré dépasse la valeur prédéfinie, ce qui fournit des informations sur le fait que l'objet se trouve à une certaine distance de l'applicateur.

**12.** Dispositif selon la revendication 11, comprenant en outre :

- un moyen pour mesurer la tension de l'applicateur de peinture électrostatique,
- un moyen pour mesurer le courant de saturation entre l'applicateur et l'objet,
- un moyen pour déterminer la tension de seuil à laquelle l'ionisation commence, laquelle tension de seuil dépend de la distance de l'objet, et
- un moyen pour calculer la distance réelle de l'objet en se basant sur la tension et le courant mesurés en tenant compte de la tension de seuil dépendante de la distance.

**13.** Système pour un processus de revêtement ou de peinture d'objets comprenant le dispositif selon la revendication 11 et comprenant en outre un moyen pour commander le mouvement dudit applicateur électrostatique, et un moyen pour commander le matériel pour manipuler ledit objet, les informations sur la distance étant utilisées pour commander ledit processus.

**14.** Système selon la revendication 13, dans lequel les informations sur la distance sont utilisées pour arrêter ledit processus lorsque la distance se trouve dans une certaine plage.

**15.** Système selon la revendication 13, dans lequel les informations sur la distance sont utilisées pour régler ledit processus.

**16.** Produit programme informatique comprenant un moyen code machine et/ou des parties codes de logiciel pour faire effectuer à un ordinateur ou à un processeur les étapes selon les revendications 1 à 10.

**17.** Produit programme informatique selon la revendication 16, stocké sur un support lisible par ordinateur.

**Fig. 1**

Ionization region

Field and ion flow
line, length L

Voltage V
Distance d

DRIFT REGION

$\theta$

R

**Fig. 2**

The Warburg distribution for negative point-to-plane corona

**Fig. 3**

Fig. 4

**Fig. 5**

**Fig. 6**

Robobell 925 with 50mm bellcup For distances from:45mm to:250mm

Fig. 7

Fig. 8

**Fig. 9**

## Fig. 10

The car body is incorrectly aligned | The car body is correctly aligned

## Fig. 11

Door opener robot

Paint robot

Door correctly opened | Door not correctly opened

**EP 1 873 479 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6096132 A
- EP 0629450 A
- US 6439485 B
- DE 19727094

### Non-patent literature cited in the description

- **R. S. SIGMOND ; M. GOLDMAN.** Some basic gas and surface discharge phenomena in electrostatics. *International Conferences of Electrostatics,* 1975
- **E. WARBURG.** Handbuch der Physics. Springer Verlag, 1900, vol. 14
- **ADAMIAKA ; ATTEN.** Simulation of corona discharge in point-plane configuration. *Journal of Electrostatics,* 2004, vol. 61, 85-98
- **F. W. PEEK.** Dielectric Phenomena in High-Voltage Engineering. McGraw-Hill, 1929